# EUROPEAN PATENT APPLICATION

(11) **EP 4 703 031 A1**
(43) Date of publication of application: **04.03.2026**
(21) Application number: 25198577.6
(22) Date of filing: 28.08.2025
(51) Int. Cl.: B01F 27/1145, B01F 33/501, B01F 35/75, B01F 35/92, B29C 64/106, B29C 64/209, B29C 64/295, B29C 64/314, B29C 64/336, B33Y 10/00, B33Y 30/00, B33Y 40/10, B33Y 70/10

(54) **TEMPERATURE-CONTROLLED MIXING AND DISPENSING DEVICE**

(30) Priority: 30.08.2024 US 202418821036
(71) Applicant: Chromalloy Gas Turbine LLC, Palm Beach Gardens, Florida 33410 (US)
(72) Inventor: Hasara, Steven, Bradenton (US); Oras, Zachary, Riverview (US); Gonzalez, Dominick, Wesley Chapel (US)
(74) Representative: DTS Patent- und Rechtsanwälte PartmbB

(57) **Abstract**

A temperature-controlled mixing and dispensing device (200) includes a receptacle (218) having a chamber (264), a mixing blade (216) disposed within the chamber (264), a heater (212) for heating the chamber (264), a nozzle (220), and a port (210) in fluidic communication with the chamber (264). The port (210) is configured to be pneumatically coupled to a pump (300D). The nozzle (220) dispenses a mixture of a first material (265M) and a second material (265N) disposed within the receptacle (218) when the pump (300D) pumps air into the port (210).

## Description

### CROSS REFERENCE TO RELATED APPLICATIONS

None.

### FIELD OF THE DISCLOSURE

The disclosure relates generally to the field of dispensers. More specifically, the disclosure relates to a dispenser that combines two or more materials in a temperature-controlled environment and dispenses the combination in precise quantities repeatably.

### SUMMARY

The following presents a summary of the invention in order to provide a basic understanding of some aspects of the invention. This summary is not an extensive overview of the invention. It is not intended to identify critical elements of the invention or to delineate the scope of the invention. Its sole purpose is to present some concepts of the invention in a simplified form as a prelude to the more detailed description that is presented elsewhere herein.

In an aspect, a temperature-controlled mixing and dispensing device includes a receptacle having a chamber, a mixing blade disposed within the chamber, a heater for heating the chamber, a nozzle, and a port in fluidic communication with the chamber. The port is configured to be pneumatically coupled to a pump. The nozzle dispenses a mixture of a first material and a second material disposed within the receptacle when the pump pumps air into the port.

In an aspect, according to any one of the preceding aspects, the temperature-controlled mixing and dispensing device further includes a lid.

In an aspect, according to any one of the preceding aspects, a port extends through an opening in the lid.

In an aspect, according to any one of the preceding aspects, a motor mount is coupled to the lid.

In an aspect, according to any one of the preceding aspects, a motor is secured to the motor mount and the motor is operably coupled to the mixing blade.

In an aspect, according to any one of the preceding aspects, the heater encircles at least part of the receptacle.

In an aspect, according to any one of the preceding aspects, the temperature-controlled mixing and dispensing device is removably coupled to an auxiliary apparatus. The auxiliary apparatus is configured to assist in operation of the temperature-controlled mixing and dispensing device.

In an aspect, according to any one of the preceding aspects, the auxiliary apparatus is a multi-axis machine.

In an aspect, according to any one of the preceding aspects, a second port coupled is in fluidic communication with the chamber.

In an aspect, according to any one of the preceding aspects, a second pump is pneumatically coupled to the second port and is configured to create a negative pressure in the chamber.

In an aspect, according to any one of the preceding aspects, a material port extends from the receptacle.

In an aspect, according to any one of the preceding aspects, a removable stopper is included for closing the material port.

In an aspect, according to any one of the preceding aspects, the receptacle includes a nozzle receiver to which the nozzle is removably coupled.

In an aspect, a method for mixing a first material and a second material using a temperature-controlled mixing and dispensing device to form a mixture is disclosed. The temperature-controlled mixing and dispensing device has a receptacle that includes a chamber. The method includes disposing the first material and the second material in the chamber. The method includes heating the chamber using a heater coupled to the receptacle and mixing the first material and the second material with a mixer while the heater heats the chamber. The method includes activating a pump in fluidic communication with the chamber to dispense the mixture from a nozzle of the temperature-controlled mixing and dispensing device.

In an aspect, according to any one of the preceding aspects, the first material is wax.

In an aspect, according to any one of the preceding aspects, the second material includes at least one of a ferromagnetic material and a synthetic material.

In an aspect, according to any one of the preceding aspects, the method includes removably coupling the temperature-controlled mixing and dispensing device to an auxiliary apparatus.

In an aspect, according to any one of the preceding aspects, the method includes pneumatically coupling a second pump to a second port of the temperature-controlled mixing and dispensing device, the second pump configured to pull air out of the chamber.

In an aspect, a temperature-controlled mixing and dispensing device includes a receptacle having a chamber and a nozzle receiver. The temperature-controlled mixing and dispensing device includes a heater coupled to the receptacle and a mixer disposed within the chamber. The temperature-controlled mixing and dispensing device includes a port in fluidic communication with the chamber, the port configured to be coupled to a pump.

In an aspect, according to any one of the preceding aspects, a secondary heater is disposed below the heater.

### BRIEF DESCRIPTION OF THE DRAWINGS

Illustrative embodiments of the present disclosure are described in detail below with reference to the attached drawing figures and wherein:
FIG. 1 is a schematic view of a gas turbine engine, according to some aspects of the disclosure.
FIG. 2A is a perspective view of a temperature-controlled mixing and dispensing device, according to some aspects of the disclosure.
FIG. 2B is another perspective view of the temperature-controlled mixing and dispensing device of FIG. 2A, according to some aspects of the disclosure.
FIG. 2C is another perspective view of the temperature-controlled mixing and dispensing device of FIG. 2A, according to some aspects of the disclosure.
FIG. 3 is an exploded view of the temperature-controlled mixing and dispensing device of FIG. 2A, according to some aspects of the disclosure.
FIG. 4 is a perspective view of a receptacle of the temperature-controlled mixing and dispensing device of FIG. 2A, according to some aspects of the disclosure.
FIG. 5 is a perspective view of the receptacle and a nozzle of the temperature-controlled mixing and dispensing device of FIG. 2A, according to some aspects of the disclosure.
FIG. 6 is a perspective view of a mixing blade of the temperature-controlled mixing and dispensing device of FIG. 2A, according to some aspects of the disclosure.
FIG. 7 is a perspective view of a main body, a lid, and a motor mount of the temperature-controlled mixing and dispensing device of FIG. 2A, according to some aspects of the disclosure.
FIG. 8A is a side view of the temperature-controlled mixing and dispensing device of FIG. 2A, according to some aspects of the disclosure.
FIG. 8B is a section view of the temperature-controlled mixing and dispensing device of FIG. 8A, according to some aspects of the disclosure.
FIG. 9 schematically illustrates a first pump and a second pump fluidly coupled to the temperature-controlled mixing and dispensing device of FIG. 2A, according to some aspects of the disclosure.
FIG. 10A is a perspective view of a multi-axis machine, according to some aspects of the disclosure.
FIGS. 10B-10C are perspective views of the temperature-controlled mixing and dispensing device of FIG. 2A operably coupled to the multi-axis machine of FIG. 10A, according to some aspects of the disclosure.
FIG. 11A is a perspective view of a robot, according to some aspects of the disclosure.
FIGS. 11B-11C are perspective views of the temperature-controlled mixing and dispensing device of FIG. 2A operably coupled to the robot of FIG. 11A, according to some aspects of the disclosure.
FIG. 12 is a flowchart illustrating a method of using the device of FIG. 2A, according to some aspects of the disclosure.

### DETAILED DESCRIPTION

A gas turbine engine typically includes a multi-stage compressor coupled to a multi-stage turbine via an axial shaft. The multi-stage compressor may include a low-pressure compressor and a high-pressure compressor, and the multi-stage turbine may include a low-pressure turbine and a high-pressure turbine. Air enters the gas turbine engine through the low-pressure compressor where its temperature and pressure are increased as it passes through subsequent stages of the compressor. The compressed air is then directed to one or more combustors where it is mixed with a fuel source to create a combustible mixture. This mixture is ignited in the combustors to create a flow of hot combustion gases. These gases are directed into the turbine causing the turbine to rotate, thereby driving the compressor. The output of the gas turbine engine can be mechanical thrust via exhaust from the turbine or shaft power from the rotation of an axial shaft, where the axial shaft can drive a generator to produce electricity.

The compressor and turbine each typically include a plurality of rotating blades and stationary vanes having an airfoil extending into the flow of compressed air or flow of hot combustion gases. Each blade or vane has a particular set of design criteria which must be met to provide the necessary work to the flow passing through the compressor and the turbine. However, due to the severe nature of the operating environment, especially in the turbine, it is often necessary to cool these blades and vanes. The blades and vanes often utilize complex internal cooling passageways in order to maximize the efficiency of cooling fluid passing therethrough.

Gas turbine engines also typically include a fan that may be disposed at the front of the engine. The fan may include a disc to which a plurality of fan blades is coupled. The fan may rotate to increase the amount of air moving through the engine, and therefore increase the engine's thrust. The size of the fan blades may be greater than the size of the compressor blades and the turbine blades.

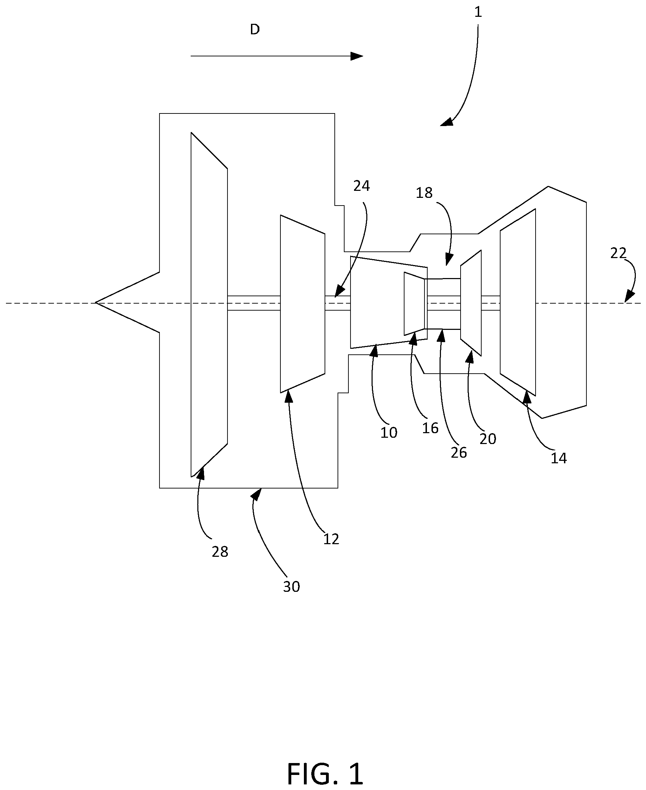

FIG. 1 schematically illustrates a gas turbine engine 1. Gas turbine engine 1 typically includes a generator 10, a low-pressure compressor 12, a low-pressure turbine 14, a high-pressure compressor 16, a combustion chamber 18, and a high-pressure turbine 20. Gases may flow into gas turbine engine 1 in direction D, which may be parallel to a longitudinal axis 22 of gas turbine engine 1. Low-pressure compressor 12 and low-pressure turbine 14 may be operably connected by low-pressure shaft 24 centered on longitudinal axis 22. Similarly, high-pressure compressor 16 and high-pressure turbine 20 may be operably connected via a high-pressure shaft 26 centered on longitudinal axis 22. High-pressure shaft 26 may be arranged around low-pressure shaft 24. Gas turbine engine 1 may also include a fan 28 that may be encased in a fan casing 30. Fan 28 may be disposed upstream low-pressure compressor 12 and may include a plurality of fan blades that rotate about longitudinal axis 22. Fan 28, in some examples, may be movably coupled to low-pressure shaft 24 and driven by low-pressure turbine 14.

Lost wax (or investment) casting process for casting metal objects has been known in the art for thousands of years. Today, the lost wax process is used in numerous industries to cast a variety of objects, such as jewelry, dentistry crowns, sculptures, and other artwork, et cetera. The lost wax process is particularly well suited for precisely casting metal parts having complex shapes and high melting temperatures, such as blades or vanes of gas turbine engines.

A turbine engine part, e.g., a blade, may be cast using the lost wax process as follows. A core representing the hollow interior of the turbine blade to be cast may be created using ceramic and/or other desirable materials, and the core may be situated in a metal tool or die. Wax may then be injected into the die and around the core, thus producing a wax pattern representing the blade to be cast. The wax pattern may closely mimic the metal blade to be cast, but in wax form (i.e., the size, shape, and features of the wax blade and the metal blade to be cast may be generally identical). A similar process may be used to produce wax patterns of other gas turbine components such as turbine vanes and shrouds or blade air seals. The wax pattern, and the core encompassed by the wax pattern, may then be dipped in a ceramic bath or "slurry," and a mold for pouring in metal may be formed. This mold may then be pulled out of the slurry and allowed to dry. The dipping and drying process may be repeated a number of times until a mold capable of undergoing the casting process is formed. Next, the wax may be melted out of the mold to create a cavity for the metal. For example, the mold may be situated in a furnace, a steam-dewax autoclave, or heated by other means to cause the wax to melt out of the mold. The melting and displacement of the wax may create a space between the ceramic core on the inside and the ceramic shell on the outside into which metal, e.g., a metal alloy, may be poured. Metal may be melted and poured into the mold and the mold may be cooled in any of a variety of manners. Once the metal has cooled, the shell material may be knocked off the metal (using a hammer, a high-pressure water blast, a vibratory table, et cetera). Finally, the core inside the metal blade may be removed by placing the metal blade in a caustic solution to dissolve or leach the core from the casting. The cast product, a (rough) blade or vane with a hollow interior in this example, may thus be formed. The cast part may then undergo additional processes (e.g., may be machined, drilled, coated, et cetera) to form the final blade usable in a gas turbine.

In some applications, it may be desirable to combine one or more materials with the wax used in one or more casting processes. As one example, a ferromagnetic material (such as iron oxide, cobalt, magnetite, et cetera) may be suspended in wax for use in a casting application. The ferromagnetic material may be heated, e.g., inductively, via microwaves, or using other means, while the ferromagnetic material is suspended in the wax. Heating the ferromagnetic material within the wax may facilitate homogenous liquefaction of the wax and maintain dimensional stability thereof. Such may reduce the likelihood of defects in the blade that is formed after the wax is melted out. As another example, polystyrene or another synthetic material may be dispersed within the wax to enhance stability and uniformity of the wax for use in a casting application.

It may be desirable to maintain the wax and the other material(s) (e.g., ferromagnetic material, synthetic material, et cetera) combined therewith at a particular temperature. For example, maintenance of the wax at a temperature above the melting point of the wax may ensure that the wax remains in liquid form (as opposed to in solid form, for example) and readily mixes with the other material(s). It may further be desirable to continually agitate the molten wax and the other material(s) being combined therewith, as such may ensure that the mixture formed by the wax and the other material(s) suspended therein is generally homogenous. The homogeneity of the mixture may facilitate repeatable dispensation of precise amounts of wax and the other material(s) for use.

Wax and the other material(s) may, in some examples, be combined and dispensed using manual or semi-manual processes. For example, wax and the other material(s) may be disposed together in a hot plate and mixed using a manual or powered mixer, and a dropper may be used to collect and dispense drops of the mixture for use. If the mixture cools within the dropper, the wax in the dropper may undesirably solidify - as such, the dropper may also need to be continually heated to ensure that the wax mixture within the dropper stays in molten form. Further, the wax mixture in the dropper, if not dispensed promptly, may become unsuitable for use because the wax and the other material(s) may not be actively mixed within the dropper. In such case, the wax mixture within the dropper may need to be discarded, and the dropper may have to be used to collect additional wax mixture from the hot plate. Such may be unduly time-consuming and laborious. It may be desirable to have a dispensing device (e.g., a fully-automated or semi-automated dispensing device) that can: (a) maintain the wax and the other material(s) at a particular temperature above the meting point of the wax, to ensure (or at least increase the likelihood) that the wax remains in liquid phase; (b) continually agitate the wax and the other material(s) prior to dispensation to ensure (or at least facilitate) homogeneity of the mixture; and/or (c) dispense (or at least facilitate dispensation of) the mixture repeatably and in precise amounts.

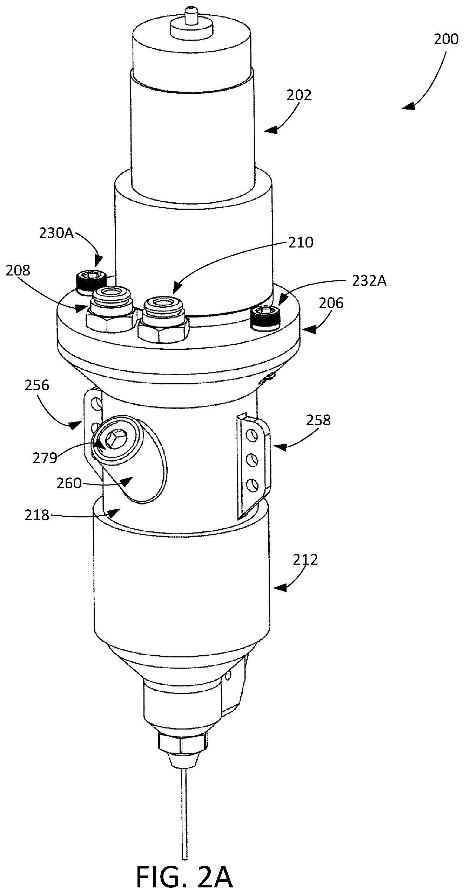

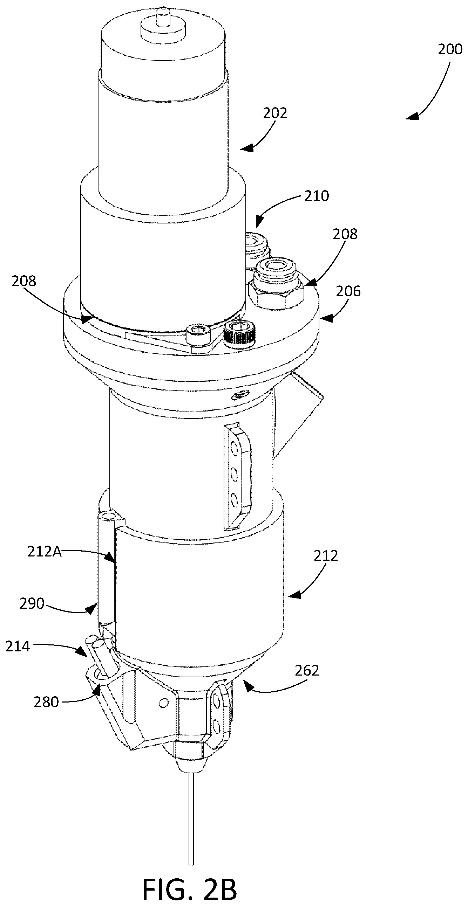

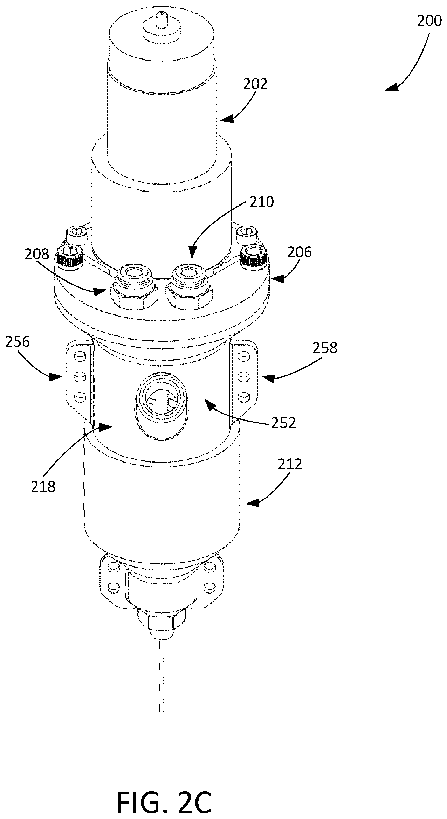

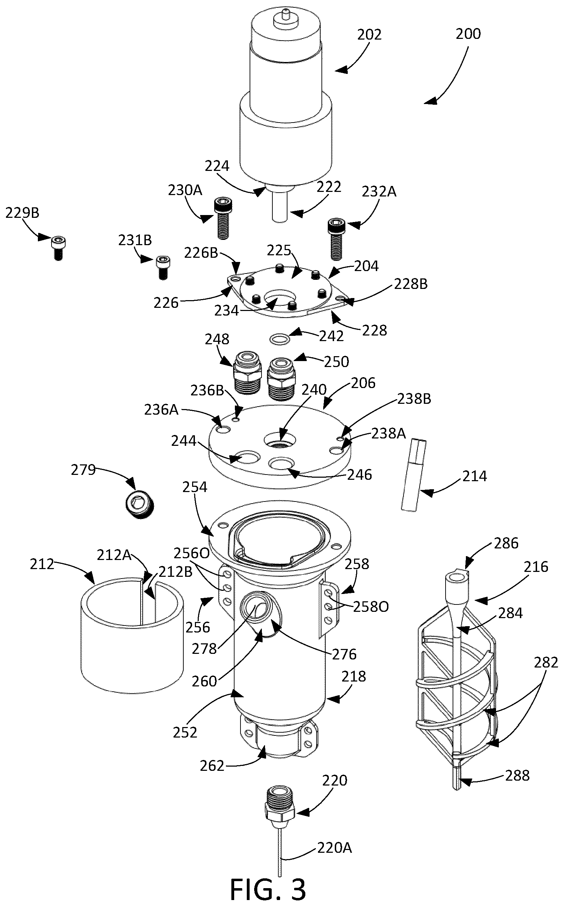

Focus is directed to FIGS. 2A-2C which show different perspective views of a temperature-controlled mixing and dispensing device (hereinafter "device 200"), and to FIG. 3, which shows an exploded view thereof. In an example of the embodiments, device 200 may include one or more of a motor 202 (see FIGS. 2A and 3), a motor mount 204 (see FIG. 3), a lid 206 (see FIG. 3), a first port 208 (see FIG. 2A), a second port 210 (see FIG. 2A), a primary heater 212 (see FIG. 2B), a secondary heater 214 (see FIG. 2B), a mixing blade 216 (see FIG. 3), a receptacle 218 (see FIG. 2C), and a nozzle 220 (see FIG. 3). In some examples, one or more of these elements may be combined and/or omitted.

Motor 202 may be a DC motor (e.g., a brushless DC motor, a brushed DC motor, a permanent magnet DC motor, a shunt wound DC motor, a series-wound DC motor, or another suitable DC motor), an AC motor (e.g., an induction motor, a synchronous motor, or another suitable AC motor), a pneumatic motor, a hydraulic motor, or any other suitable motor. In some examples, motor 202 may have an output shaft 222 (see FIG. 3) and a bearing 224. Output shaft 222 may extend from a rotatable rotor (not expressly shown in the figures) of motor 202 and be supported by bearing 224. As discussed herein, output shaft 222 of motor 202 may be operably coupled to mixing blade 216.

Motor mount 204 may, in some examples, have a central portion 225 (see FIG. 3). A first wing 226, and a second wing 228 that opposes first wing 226, may each extend outward from central portion 225. In an example of the embodiments, central portion 225 may be generally cylindrical, and each of first wing 226 and second wing 228 may be generally triangular. In other examples, each of central portion 225, first wing 226, and second wing 228 may be spherical, pyramidal, or be formed in other symmetrical and/or asymmetrical shapes.

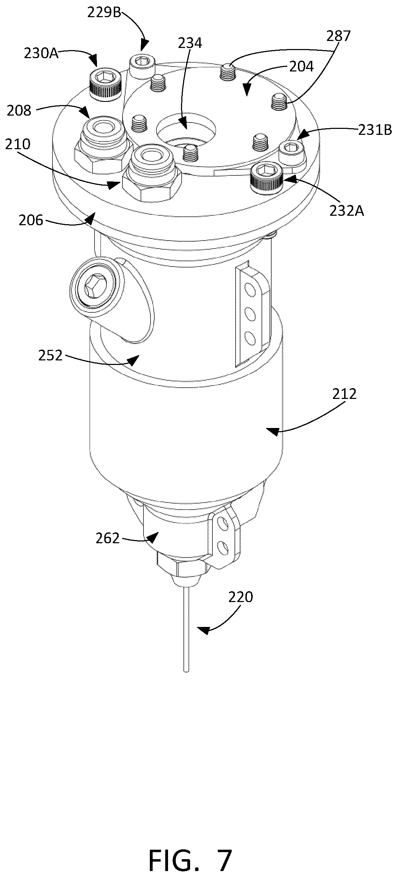

First wing 226 may have a first opening 226B and second wing 228 may have a second opening 228B. Each of first opening 226B and second opening 228B may be configured for the passage of a fastener therethrough. For example, first opening 226B may be threaded and may be configured for the passage of a first bolt 229B (see FIGS. 3 and 7) having corresponding threading, and second opening 228B may likewise be threaded and may be configured for the passage of a second bolt 231B having corresponding threading. Central portion 225 of motor mount 204 may include an inner opening 234 that extends through central portion 225. Inner opening 234 may be configured for the passage of output shaft 222 and bearing 224 of motor 202 therethrough.

In some examples, lid 206 (see FIG. 3) may be generally cylindrical. In other examples, lid 206 may be pyramidal, spherical, or be formed in other symmetrical and/or asymmetrical shapes. Lid 206 may have a first opening 236A, a second opening 238A, a first aperture 236B, and a second aperture 238B, each of which may extend through lid 206. First opening 236A and second opening 238A may oppose each other. First aperture 236B may be proximate first opening 236A and second aperture 238B may be proximate second opening 238A. In some examples, first opening 236A and second opening 238A may be respectively configured for the passage of a first fastener 230A and a second fastener 232A therethrough. Moreover, first aperture 236B and second aperture 238B may be respectively configured for the passage of a first bolt 229B and second bolt 231B therethrough. Lid 206 may include a central opening 240 configured for passage of output shaft 222 of motor 202.

In some examples, motor mount 204 may be configured to be disposed atop lid 206 such that: (a) first opening 226B in first wing 226 of motor mount 204 corresponds to and aligns with first aperture 236B in lid 206: (b) second opening 228B in second wing 228 of motor mount 204 corresponds to and aligns with second aperture 238B in lid 206; (c) and inner opening 234 in central portion 225 of motor mount 204 corresponds to and aligns with central opening 240 in lid 206.

In some examples, a first sealing device 242 (see FIG. 3) may be disposed within central opening 240 of lid 206. First sealing device 242 may, for example, be an O-ring or another radial seal. First sealing device 242 may provide a dynamic seal, i.e., first sealing device 242 may not be fixedly coupled to lid 206 within central opening 240. In other examples, however, first sealing device 242 may be fixedly secured (e.g., may be adhesively coupled) within central opening 240.

Lid 206 may further include a first aperture 244 and a second aperture 246. In some examples, first aperture 244 may be configured to receive first stem 248 and second aperture 246 may be configured to receive second stem 250. For example, first aperture 244 may be threaded and first stem 248 may have corresponding threading to allow first stem 248 to be threadingly coupled within first aperture 244. Similarly, second aperture 246 may be threaded and second stem 250 may have corresponding threading to allow second stem 250 to be threadingly coupled within second aperture 246.

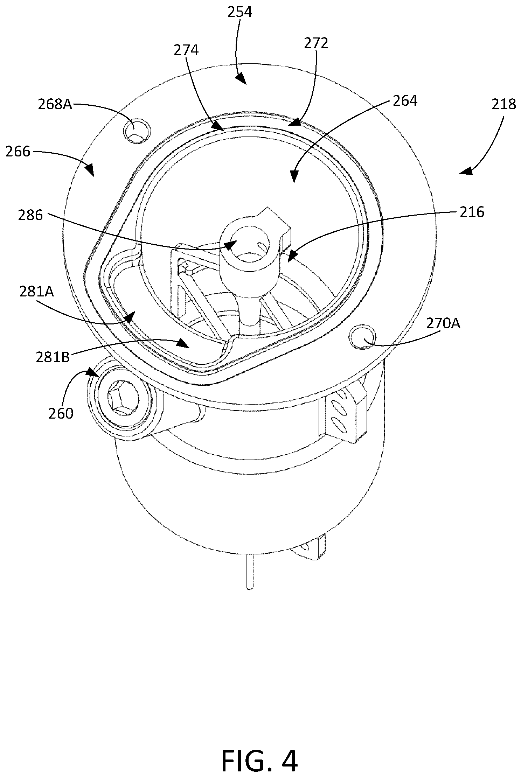

In some examples of the embodiments, receptacle 218 may have a main body 252, a flanged portion 254 (see FIGS. 3 and 4), a first connecting member 256, a second connecting member 258, a material port 260, a nozzle receiver 262, and a holding area or chamber (hereinafter chamber 264) (see FIG. 4).

Flanged portion 254 may include an outer rim 266 having a first opening 268A (see FIG. 4) and a second opening 270A that each extend through outer rim 266. First opening 268A may be configured to receive first fastener 230A and second opening 270A may be configured to receive second fastener 232A. More specifically, lid 206 may be configured to be disposed atop outer rim 266 such that first opening 236A in lid 206 corresponds to and aligns with first opening 268A (see FIG. 4) in outer rim 266, and second opening 238A in lid 206 corresponds to and aligns with second opening 270A in outer rim 266. Thus, lid 206 may be disposed atop outer rim 266; first fastener 230A may then be passed through each of first opening 236A in lid 206 and through first opening 268A in outer rim 266 of receptacle 218, and second fastener 232A may be passed through each of second opening 238A in lid 206 and through second opening 270A in outer rim 266 of receptacle 218. In this manner, lid 206 may be fastened to receptacle 218, and more specifically, to outer rim 266 thereof.

Flanged portion 254 may include a groove 272 (see FIG. 4) that is inwardly adjacent outer rim 266. A second sealing device 274 may be disposed within groove 272. Second sealing device 274 may, in some examples, be an O-ring that is fixedly secured within groove 272 (i.e., second sealing device 274 may be a static seal). In other examples, second sealing device 274 may be another sealing device that is fixedly secured or otherwise retained within groove 272.

In some examples of the embodiments, main body 252 of may be generally cylindrical. In other examples, main body 252 may be formed in other symmetrical or asymmetrical shapes. First connecting member 256 and second connecting member 258 may each extend outwards from main body 252 away from each other. First connecting member 256 may have one or more connecting openings 256O (see FIG. 3) and second connecting member 258 may have one or more connecting openings 258O. First connecting member 256 and second connecting member 258 may allow for device 200 to be operably coupled to another apparatus, e.g., an apparatus configured to automatically reposition device 200 during use.

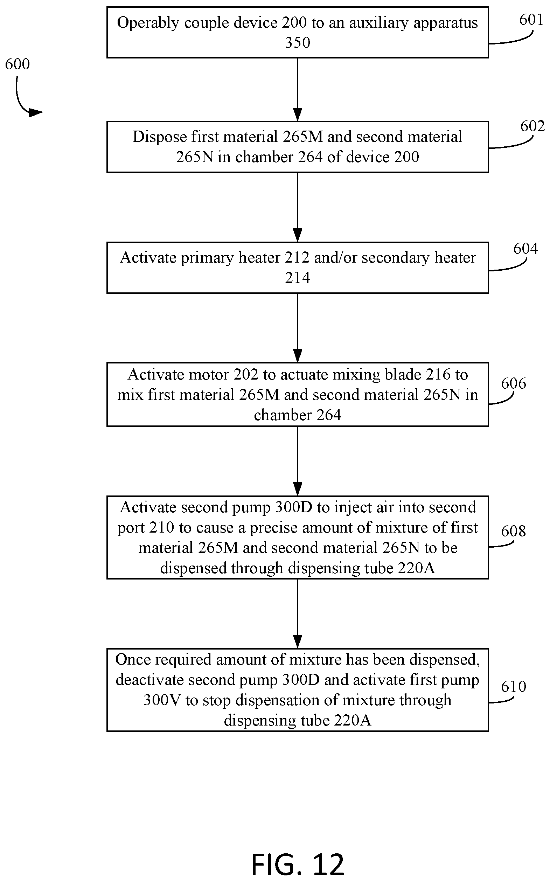

Main body 252 of receptacle 218 may define chamber 264 (see FIG. 4). Chamber 264 may, in some examples, be configured to receive mixing blade 216 and at least a first material 265M (see FIG. 12) and a second material 265N to be mixed together. As discussed above, first material 265M may be wax and/or another material, and second material 265N may be ferromagnetic material, synthetic material, and/or one or more other materials. Material port 260 may include a stem 276 that is coupled to outer surface of main body 252 (see FIG. 3). Stem 276 of material port 260 may have an opening 278 via which chamber 264 may be accessed. Opening 278 may be selectively closable, e.g., using stopper 279 (see FIG. 2A).

Flanged portion 254 may include a recess 281A (see FIG. 4), which in some examples, may be inwardly adjacent groove 272. A diverter 281B may be disposed within recess 281A. In some examples, diverter 281B may be configured to divert or redirect air from first port 208 and/or second port 210 into chamber 264.

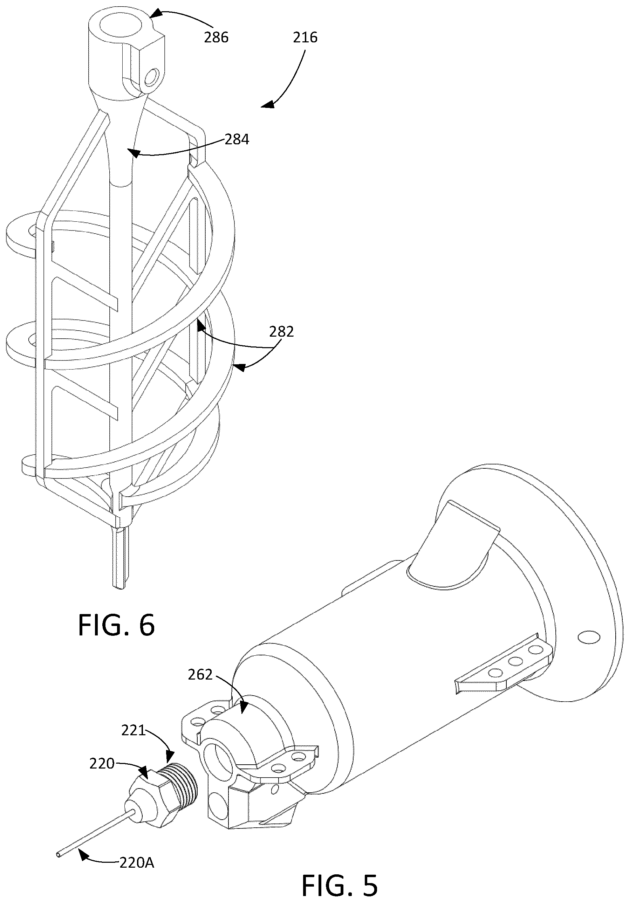

Nozzle receiver 262 (see FIGS. 3 and 5) may extend from main body 252. In some examples, nozzle receiver 262 may be threaded and nozzle 220 may include corresponding threading 221 (see FIG. 5) that allows nozzle 220 to be coupled to nozzle receiver 262. Nozzle 220 may be interchangeable with another nozzle 220. Each nozzle 220 may have a dispensing tube 220A having a specific diameter. Nozzle receiver 262 may be configured to receive nozzle 220 having dispensing tube 220A and any one of other nozzles 220 having dispensing tubes 220A of differing diameters. Increasing diameter of dispensing tube 220A may allow for increased volume of the mixture within chamber 264 to be dispensed.

Primary heater 212 may, in some examples, be a barrel or band heater. For example, primary heater 212 may have an arced shell having ends 212A and 212B (see FIG. 3) that is configured to encircle or partially encircle the outer surface of main body 252, e.g., below material port 260. In other examples, primary heater 212 may be a different type of heater (e.g., a blanket heater). Primary heater 212 may be configured to selectively heat main body 252, which may in-turn heat contents of chamber 264. A temperature sensor 290 (see FIG. 2B), e.g., a thermocouple, a thermistor, or other temperature sensor, may be disposed on main body 252 between ends 212A and ends 212B of primary heater 212. Temperature sensor 290 may be usable to monitor temperature of contents of chamber 264.

In some examples, nozzle receiver 262 may include a pocket 280 (see FIG. 2B). Pocket 280 may, in some examples, be configured to retain a secondary heater 214. In an example of the embodiments, secondary heater 214 may be a cartridge heater - e.g., a tube shaped heater having resistance coils wound around a ceramic core that is surrounded by a dielectric material and encased in a sheath. Secondary heater 214 may be proximate nozzle 220 relative to primary heater 212, and may more effectively heat any material(s) inside dispensing tube 220A relative to primary heater 212.

Mixing blade 216 (see FIGS. 3 and 6) may, in some examples, be a helical impeller or a double-helix impeller. For example, mixing blade 216 may include helical ribbons 282 arranged about a shaft 284. Helical ribbons 282 may continually lift and agitate first material 265M and second material 265N such that the mixture thereof in chamber 264 is homogenous or generally homogenous.

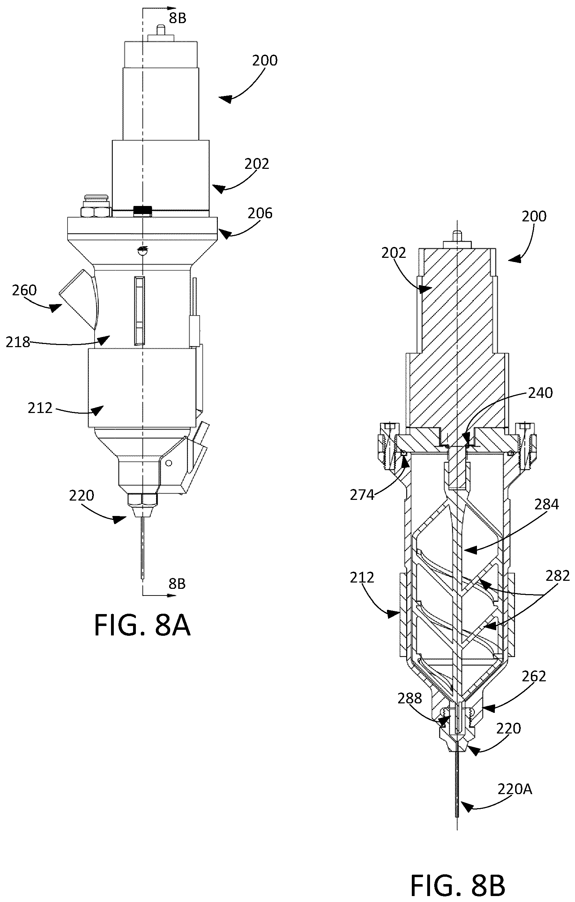

Shaft 284 of mixing blade 216 may have a connecting portion 286 at an upper end thereof. Connecting portion 286 may be configured to operably receive output shaft 222 of motor 202. Rotation of output shaft 222 may cause shaft 284 of mixing blade 216 to rotate therewith, which may in-turn cause helical ribbons 282 to also rotate and agitate contents of chamber 264. Shaft 284 of mixing blade 216 may also include a tip 288 (see FIG. 3) at a lower end thereof. Tip 288 may be configured to be disposed within nozzle receiver 262 (see FIG. 8B) to support mixing blade 216 retained within chamber 264.

FIG. 7 shows device 200 without motor 202. Specifically, as shown in FIG. 7, primary heater 212 may be wrapped around main body 252 such that it partially surrounds main body 252 (see FIG. 2B), and nozzle 220 may be removably coupled to nozzle receiver 262 (e.g., via threading 221, see FIG. 5). Mixing blade 216 may be disposed within chamber 264 such that connecting portion 286 (see FIG. 3) of mixing blade 216 opposes nozzle 220. Lid 206 may be secured to receptacle 218, and specifically, to flanged portion 254 thereof. Specifically, lid 206 may be disposed on outer rim 266 of flanged portion 254 such that: (a) each of first aperture 244 (see FIG. 3) and second aperture 246 in lid 206 are above diverter 281B (see FIG. 4); (b) first opening 236A (see FIG. 3) in lid 206 corresponds to and aligns with first opening 268A (see FIG. 4) in outer rim 266 of flanged portion 254; (c) second opening 238A in lid 206 corresponds to and aligns with second opening 270A in outer rim 266 of flanged portion 254; and (d) connecting portion 286 of mixing blade 216 disposed within chamber 264 extends through or otherwise aligns with central opening 240 in lid 206. First fastener 230A may be passed through each of first opening 236A in lid 206 and first opening 268A in outer rim 266 of flanged portion 254 of receptacle 218, and second fastener 232A may be passed through each of second opening 238A in lid 206 and second opening 270A in outer rim 266 of flanged portion 254 of receptacle 218, to fasten lid 206 to receptacle 218.

First stem 248 (see FIG. 3) may be passed through first aperture 244 in lid 206 to form first port 208, and second stem 250 may be passed through second aperture 246 in lid 206 to form second port 210. First stem 248 and second stem 250 may each be directly above diverter 281B.

FIG. 7 also shows motor mount 204 after it has been coupled to lid 206. Specifically, motor mount 204 may be disposed atop lid 206 such that first opening 226B (see FIG. 3) in first wing 226 of motor mount 204 corresponds to and aligns with first aperture 236B in lid 206, and second opening 228B in second wing 228 of motor mount 204 corresponds to and aligns with second aperture 238B in lid 206. First bolt 229B (see FIG. 7) may be passed through each of first opening 226B in first wing 226 of motor mount 204 and first aperture 236B in lid 206, and second bolt 231B may be passed through each of second opening 228B in second wing 228 of motor mount 204 and second aperture 238B in lid 206. When motor mount 204 is secured to lid 206 in this fashion, inner opening 234 in motor mount 204 may correspond to and align with central opening 240 in lid 206. Connecting portion 286 of mixing blade 216 may be accessible through inner opening 234 in motor mount 204 and central opening 240 in lid 206.

Motor 202 may be mounted to motor mount 204, e.g., via fasteners 287 (see FIG. 7) or other means, such that output shaft 222 and bearing 224 of motor 202 pass through inner opening 234 in motor mount 204 and central opening 240 in lid 206 or otherwise align therewith. Output shaft 222 of motor 202 may be operably coupled to connecting portion 286 of mixing blade 216 that is retained within chamber 264, such that rotation of output shaft 222 of motor 202 causes corresponding rotation of shaft 284 of mixing blade 216 and helical ribbons 282 thereof (see FIGS. 8A-8B).

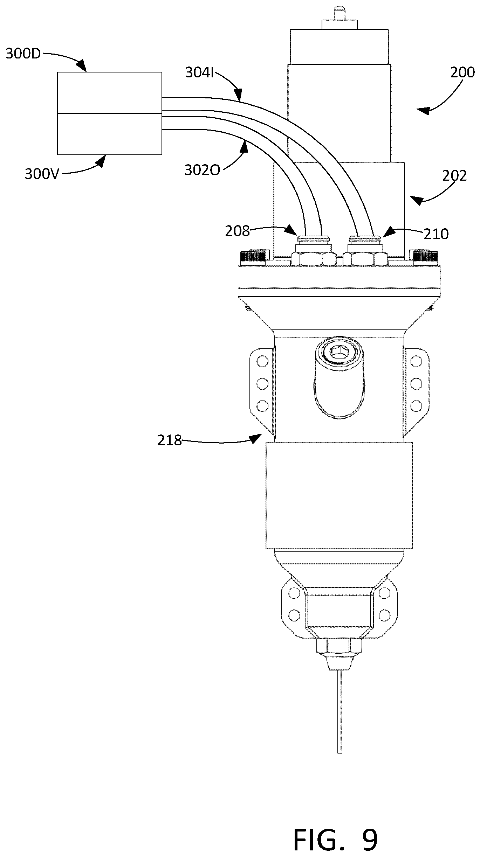

Each of first port 208 and second port 210 may be in selective fluidic communication with chamber 264 (see FIGS. 2C and 4). In some examples, each of first port 208 and second port 210 may be pneumatically coupled to a pump. For instance, as shown in FIG. 9, first port 208 may be coupled to a first pump 300V via a first tube 3020, and second port 210 may be coupled to a second pump 300D via a second tube 304I. First pump 300V may be a vacuum pump or may otherwise be configured to draw air out of chamber 264 via first port 208. Second pump 300D may be an air dispensing pump, i.e., may be configured to dispense air into chamber 264 via second port 210. In some examples, functionality of first pump 300V and second pump 300D may be combined into a solitary device.

Chamber 264 may be configured to be an air-tight or a generally air-tight compartment. More specifically, various openings in device 200 may be selectively closable to seal or generally seal chamber 264. For example, material port 260 may be sealed shut using stopper 279. First sealing device 242 may preclude (or at least limit) air from escaping or entering chamber 264 via central opening 240 in lid 206 when output shaft 222 and bearing 224 of motor 202 are disposed within central opening 240. Further, second sealing device 274 may preclude (or at least limit) air from escaping or entering chamber 264 between outer rim 266 of flanged portion 254 of receptacle 218 and lid 206. When device 200 is assembled as shown in FIG. 9, air may enter or exit chamber 264 only (or at least primarily) via first port 208, second port 210, and/or dispensing tube 220A of nozzle 220.

First material 265M (see FIG. 12) and second material 265N to be mixed together may be deposited into chamber 264 of receptacle 218. As one example, stopper 279 may be removed from material port 260, and specifically from stem 276 thereof, and first material 265M and second material 265N may be deposited into chamber 264 through material port 260. Once the deposition of first material 265M and second material 265N into chamber 264 is complete, stopper 279 may be used to close off material port 260 to seal or generally seal chamber 264. As another example, lid 206 may be uncoupled from outer rim 266 of flanged portion 254 of receptacle 218 (see FIG. 4, for instance, showing receptacle 218 without lid 206), and first material 265M and second material 265N may be deposited into the now open chamber 264 from the top. Once first material 265M and second material 265N have been deposited into chamber 264, lid 206 may be secured to outer rim 266 of receptacle 218 as discussed above to seal or generally seal chamber 264.

Motor 202 may be powered to agitate and mix first material 265M and second material 265N within chamber 264. In some examples, motor 202 may be powered before first material 265M and second material 265N are deposited in chamber 264. In other examples, motor 202 may be powered after (e.g., shortly after) or at about the same time as first material 265M and second material 265N are deposited in chamber 264. Powering of motor 202 may cause rotation of output shaft 222, which may in-turn cause helical ribbons 282 of mixing blade 216 to rotate therewith and mix first material 265M and second material 265N.

A heater, e.g., primary heater 212, may be activated to increase the temperature of the mixture of first material 265M and second material 265N. In some examples, primary heater 212 may be activated before first material 265M and second material 265N are deposited in chamber 264. In other examples, primary heater 212 may be activated after (e.g., shortly after) or at about the same time as first material 265M and second material 265N are deposited in chamber 264. Activation of primary heater 212 may ensure that first material 265M and/or second material 265N remain in liquid form. In some examples, primary heater 212 and/or secondary heater 214 may be activated or deactivated, or the respective temperature thereof may be increased or decreased, based on temperature readings obtained from temperature sensor 290. Agitation of first material 265M and second material 265N in chamber 264 by mixing blade 216, and heating thereof by primary heater 212, may ensure or at least increase the likelihood that a homogenous mixture of first material 265M and second material 265N maintained within chamber 264.

A suitable temperature at which the temperature of the mixture of first material 265M and second material 265N is to be maintained may depend, among other things, on the first material 265M and second material 265N themselves. Similarly, a suitable speed of rotation of motor 202 and mixing blade 216 may likewise depend, at least in part, on the first material 265M and second material 265N themselves, e.g., on the viscosity thereof. In one example, where first material 265M is wax and second material 265N is iron oxide, the temperature of the mixture may be maintained at or about 400K and the mixing blade 216 may be rotated at or about 30 rotations per minute. Such may ensure that the mixture of wax and iron oxide within chamber 264 is maintained in liquid form and is generally homogenous.

Dispensation of the mixture from nozzle 220, i.e., dispensing tube 220A thereof, may be controlled pneumatically. For example, when dispensation of the mixture within chamber 264 is desired, second pump 300D (see FIG. 9) may be activated to cause air to be dispensed into second port 210 of device 200. This air may push the mixture within chamber 264 out the dispensing tube 220A. The volume of the mixture that is dispensed through dispensing tube 220A may be controlled via second pump 300D. For example, pressure of air being pumped into second port 210 may be increased to correspondingly increase the volume of mixture in chamber 264 that is dispensed through dispensing tube 220A of nozzle 220, and pressure of air being pumped into second port 210 may be decreased to correspondingly decrease the volume of the mixture in chamber 264 that is dispensed through dispensing tube 220A of nozzle 220. In some examples, the volume of mixture that is dispensed through dispensing tube 220A of nozzle 220 may be regulated by controlling the time for which second pump 300D dispenses air into second port 210. For instance, pressure of air pumped into second port 210 by second pump 300D may be kept constant, and the volume of mixture that is dispensed may be increase and decreased by respectively increasing and decreasing the time for which the second pump 300D is activated.

Once second pump 300D is activated and the dispensation of the mixture through dispensing tube 220A is initiated, the mixture may continue to be dispensed from dispensing tube 220A (albeit at a slower rate) even when second pump 300D is powered off (due to gravity, for example). First pump 300V may be activated to halt flow of mixture out of dispensing tube 220A. Specifically, first pump 300V may pull air out of chamber 264 to create a negative pressure (e.g., a vacuum or near-vacuum) within chamber 264, which may resultantly preclude the mixture from being dispensed through dispensing tube 220A.

In an aspect of the embodiments, device 200 may be automatic and/or semiautomatic (e.g., may be controlled using one or more microprocessors that include machine readable instructions). For instance, primary heater 212 and/or secondary heater 214 may be automatically activated when second pump 300D is actuated to dispense first material 265M and second material 265N into chamber 264. Further, the temperature of primary heater 212 and/or secondary heater 214 may be set to a particular temperature and may then be automatically regulated based on the temperature indicated by temperature sensor 290. Similarly, activation and deactivation of motor 202 may, in some examples, be automated (e.g., motor 202 may be automatically activated when second pump 300D is actuated to dispense first material 265M and second material 265N into chamber 264; or, for instance, a weight sensor (not shown) may be provided within chamber 264 and motor 202 may be automatically actuated based on indications from the weight sensor). In some examples, one or more features of device 200 may be controllable both automatically and manually (e.g., primary heater 212 and/or mixing blade 216 may be activated and deactivated automatically but these functions may be manually overridden).

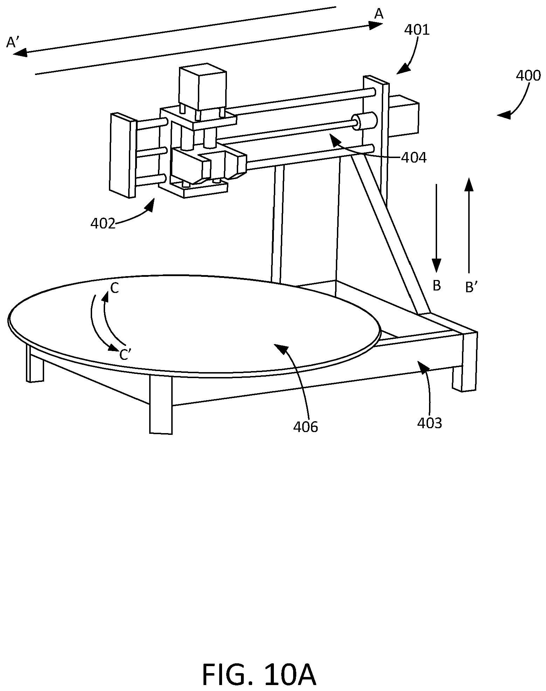

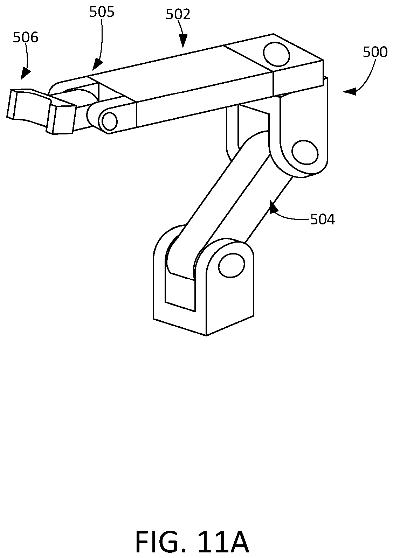

In some examples, device 200 may be configured to be coupled to an auxiliary apparatus 350 (see FIG. 12). The phrase "auxiliary apparatus" as used herein, refers to any mechanized apparatus: (a) to which device 200 may be operably coupled; and (b) that is usable to operate or assist in the operation of device 200. For example, auxiliary apparatus 350 may be an apparatus that can automatically control second pump 300D of device 200, automatically activate primary heater 212 of device 200, and/or automatically reposition device 200 for use, et cetera. Multi-axis machine 400 (FIG. 10A) and robot 500 (FIG. 11A) are each non-limiting examples of an auxiliary apparatus 350.

FIG. 10A shows multi-axis machine 400. Multi-axis machine 400 may be motorized and have a frame 401. Frame 401 may include a stand 403 usable to place multi-axis machine 400 on a working surface (e.g., a desk, table, or other surface). Frame 401 may include one or more lateral members 404 to which an adapter 402 is translationally coupled. Adapter 402 may be movable in one or more directions. Adapter 402 may, in some examples, be laterally and selectively movable along lateral member(s) 404 in direction A, and in direction A' that opposes direction A. Adapter 402 may, in some examples, be vertically and selectively movable in direction B, and in direction B' that opposes direction B. Frame 401 of multi-axis machine 400 may also, in some examples, include a rotatable stand or disc (hereinafter "disc 406"). Disc 406 may be rotatable in direction C, and in direction C' that opposes direction C.

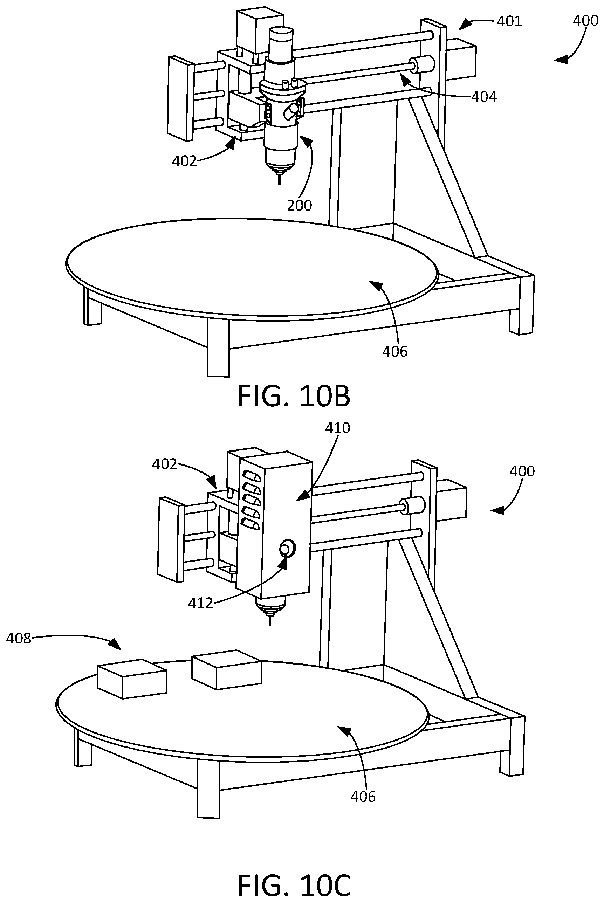

Adapter 402 may be configured to couplingly receive device 200. That is, and as shown in FIG. 10B, device 200 may removably secured to adapter 402. While not shown in FIGS. 10A-10C, first port 208 and second port 210 of device 200 may be respectively and fluidly coupled to first pump 300V and second pump 300D (see FIG. 9). Further, as discussed above, each of first material 265M and second material 265N within chamber 264 of device 200 coupled to adapter 402 may be heated to a specific temperature by primary heater 212 and/or secondary heater 214, and the first material 265M and second material 265N may be continually mixed using mixing blade 216 of device 200.

In use, a plurality of items 408 (e.g., a plurality of items formed using wax, see FIG. 10C) onto which the mixture of first material 265M and second material 265N is to be dispensed may be situated on disc 406. Disc 406 may be rotated such that each of the plurality of items 408 successively aligns with nozzle 220 (see FIG. 3) of device 200. When nozzle 220 is directly above one of the plurality of items 408, second pump 300D may be activated to cause a precise volume of the homogenous mixture of first material 265M and second material 265N to be dispensed on that item 408 via dispensing tube 220A. Once dispensation of the mixture on item 408 is complete, second pump 300D may be deactivated and first pump 300V may be activated to preclude additional flow of the mixture out the dispensing tube 220A. The disc 406 may rotate to cause another item 408 to come directly underneath dispensing tube 220A. The process may be repeated to dispense a precise volume of the mixture onto another item 408, and so on.

In some examples, a cover 410 (see FIG. 10C) may be affixed to adapter 402 while device 200 is secured thereto. Cover 410 may have an opening 412 that corresponds to material port 260 (see FIG. 2A). That is, material port 260 of device 200 may be accessible via opening 412. Cover 410 may thus protect device 200 without compromising the ability to add first material 265M and second material 265N to chamber 264 of device 200 via material port 260.

FIG. 11A shows a robot 500 configured for multi-axis movement. Robot 500 may have a body 504 to which an arm 502 is movably and pivotably coupled. A rotatable member 505 may be rotatably coupled to arm 502, and an adapter 506 may be movably coupled to rotatable member 505.

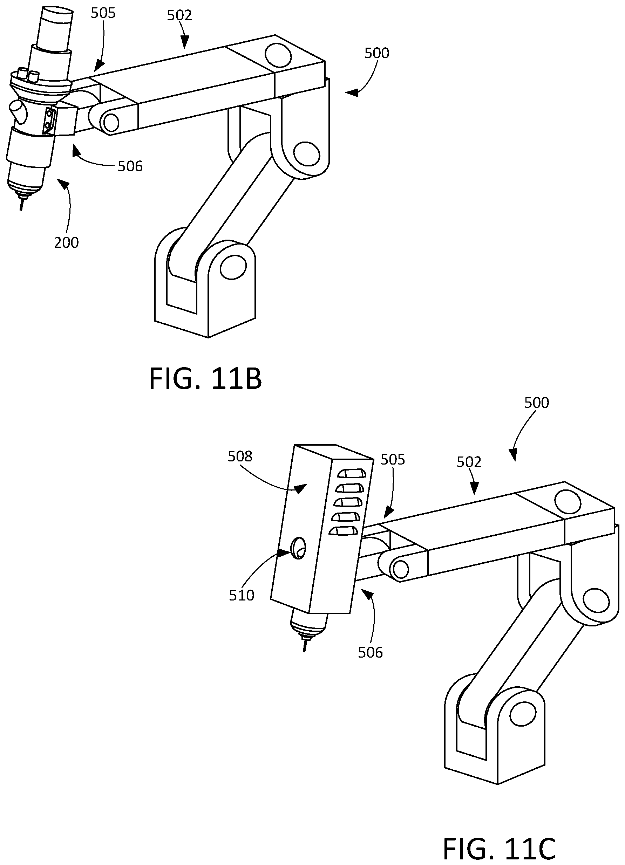

In some examples, adapter 506 may be configured to receive device 200 (see FIG. 11B), which may allow device 200 to freely move in three-dimensional space (e.g., with six degrees of freedom). While not shown in FIGS. 11A-11C, first port 208 and second port 210 of device 200 may be respectively and fluidly coupled to first pump 300V and second pump 300D (see FIG. 9). Robot 500 may reposition device 200 as desired, to dispense the homogenous mixture of first material 265M and second material 265N. As shown in FIG. 11C, in some examples, a protective cover 508 having an opening 510 that corresponds to material port of device 200 may be disposed on adapter 506.

A method 600 of using device 200 is illustrated in FIG. 12. At step 601, device 200 may be operably coupled to auxiliary apparatus 350. As discussed above, auxiliary apparatus 350 may be multi-axis machine 400, robot 500, or another mechanized device usable to operate or assist in the operation of device 200.

At step 602, each of first material 265M and second material 265N is disposed in chamber 264 of device 200. For example, as discussed above, first material 265M and second material 265N may be disposed in chamber 264 of device 200 via material port 260, or lid 206 may be opened to provide access to chamber 264. First material 265M and second material 265N may be any material: (a) that are to be mixed at a temperature above room temperature; (b) that are to be agitated so as to result in a mixture that is homogeneous or generally homogenous; and/or (c) whose mixture is to be dispensed repeatably in precise amounts. For example, first material 265M may be wax and second material 265N may be a ferromagnetic material. Or, for instance, first material 265M may be wax and second material may be synthetic material. These examples are non-limiting, and each of first material 265M and second material 265N may be any material or materials that can be suitably mixed using device 200.

At step 604, primary heater 212 and/or secondary heater 214 may be activated to heat the mixture in chamber 264 of device 200. At step 606, motor 202 of device 200 may be activated to cause mixing blade 216 to actuate and mix first material 265M and second material 265N in chamber 264. As discussed above, steps 602, 604, and 606 may be effectuated in a different order. For example, mixing blade 216 may be actuated at step 606 prior to disposing first material 265M and 265N into chamber 264 at step 602. Alternately or in addition, primary heater 212 and/or secondary heater 214 may be actuated at step 604 prior to step 602.

At step 608, second pump 300D may inject air into second port 210 to cause a precise amount of the mixture of first material 265M and second material 265N to be dispensed through dispensing tube 220A of nozzle 220. As discussed above, the volume of mixture of first material 265M and second material 265N that is dispensed through dispensing tube 220A may be controlled using second pump 300D. For example, the pressure of air may be controlled and/or the time for which second pump 300D is activated may be regulated to increase or decrease the volume of mixture dispensed from dispensing tube 220A.

At step 610, once the required amount of mixture of first material 265M and second material 265N has been dispensed through dispensing tube 220A, second pump 300D may be deactivated and first pump 300V may be activated to create a vacuum in chamber 264 to stop dispensation of mixture through dispensing tube 220A. As discussed above, each of steps 602, 604, 606, 608, and 610 may be automated and/or effectuated manually. For example, auxiliary apparatus 350 may automatically activate primary heater 212 or primary heater 212 may be activated manually.

Device 200 may be fabricated through a variety of processes and from a variety of materials (e.g., metals, polymers, et cetera). In some examples of the embodiments, one or more components of device 200 may be manufactured and assembled using conventional machining and assembly techniques. In other examples of the embodiments, one or more components of device 200 may be additively manufactured. There are several known additive printing methods such as a material extrusion method, a material jetting method, a binder jetting method, a sheet lamination method, a vat photo-polymerization method, a powder bed fusion method, a directed energy deposition (DED) method, et cetera. Any one or more of these methods, or any other additive manufacturing method, now known or hereinafter developed, may be employed to manufacture one or more components of device 200.

Thus, as has been described, device 200 may be usable to heat and physically agitate two or more materials such that precise amounts of a mixture of the materials may be selectively dispensed.

As used herein, the terms "first," "second," "third", and "fourth" may be used interchangeably to distinguish one component from another and are not intended to signify location or importance of the individual components. The terms "coupled," "fixed," "attached to," and the like refer to both direct coupling, fixing, or attaching, as well as indirect coupling, fixing, or attaching through one or more intermediate components or features, unless otherwise specified herein. The singular forms "a," "an," and "the" include plural references unless the context clearly dictates otherwise.

Many different arrangements of the various components depicted, as well as components not shown, are possible without departing from the spirit and scope of the present disclosure. Embodiments of the present disclosure have been described with the intent to be illustrative rather than restrictive. Alternative embodiments will become apparent to those skilled in the art that do not depart from its scope. A skilled artisan may develop alternative means of implementing the aforementioned improvements without departing from the scope of the present disclosure.

It will be understood that certain features and subcombinations are of utility and may be employed without reference to other features and subcombinations and are contemplated within the scope of the claims. Not all steps listed in the various figures need be carried out in the specific order described.

## Claims

1. A temperature-controlled mixing and dispensing device (200), comprising:
a receptacle (218) having a chamber (264);
a mixing blade (216) disposed within the chamber (264);
a heater (212) for heating the chamber (264);
a nozzle (220); and
a port (210) in fluidic communication with the chamber (264), the port (210) configured to be pneumatically coupled to a pump (300D);
wherein, the nozzle (220) dispenses a mixture of a first material (265M) and a second material (265N) disposed within the receptacle (218) when the pump (300D) pumps air into the port (210).

2. The temperature-controlled mixing and dispensing device (200) of claim 1, wherein the temperature-controlled mixing and dispensing device (200) further includes a lid (206).

3. The temperature-controlled mixing and dispensing device (200) of claim 2, wherein the port (210) extends through an opening (246) in the lid (206).

4. The temperature-controlled mixing and dispensing device (200) of claim 3, further including a motor mount (204) coupled to the lid (206).

5. The temperature-controlled mixing and dispensing device (200) of claim 4, further including a motor (202) secured to the motor mount (204), the motor (202) operably coupled to the mixing blade (216).

6. The temperature-controlled mixing and dispensing device (200) of claim 1, wherein the heater (212) encircles at least part of the receptacle (218).

7. The temperature-controlled mixing and dispensing device (200) of claim 1 removably coupled to an auxiliary apparatus (350), the auxiliary apparatus (350) configured to assist in operation of the temperature-controlled mixing and dispensing device (200).

8. The temperature-controlled mixing and dispensing device (200) of claim 7, wherein the auxiliary apparatus (350) is a multi-axis machine (400).

9. The temperature-controlled mixing and dispensing device (200) of claim 1, further including a second port (208) in fluidic communication with the chamber (264).

10. The temperature-controlled mixing and dispensing device (200) of claim 9, further including a second pump (300V) pneumatically coupled to the second port (208), the second pump (300V) configured to create a negative pressure in the chamber (264).

11. The temperature-controlled mixing and dispensing device (200) of claim 1, further including a material port (260) extending from the receptacle (218).

12. The temperature-controlled mixing and dispensing device (200) of claim 11, further including a removable stopper (279) for closing the material port (260).

13. A method for mixing a first material (265M) and a second material (265N) using a temperature-controlled mixing and dispensing device (200) to form a mixture, the temperature-controlled mixing and dispensing device (200) having a receptacle (218) that includes a chamber (264), the method comprising:
disposing the first material (265M) and the second material (265N) in the chamber (264);
heating the chamber (264) using a heater (212) coupled to the receptacle (218);
mixing the first material (265M) and the second material (265N) with a mixer (216) while the heater (212) heats the chamber (264); and
activating a pump (300D) in fluidic communication with the chamber (264) to dispense the mixture from a nozzle (220) of the temperature-controlled mixing and dispensing device (200).

14. The method of claim 13, wherein the first material (265M) is wax.

15. The method of claim 14, wherein the second material (265N) includes at least one of a ferromagnetic material and a synthetic material.
